# EUROPÄISCHE PATENTANMELDUNG

(11) **EP 4 559 660 A1**
(43) Veröffentlichungstag der Anmeldung: **28.05.2025**
(21) Anmeldenummer: 24215385.6
(22) Anmeldetag: 26.11.2024
(51) Int. Cl.: B29C 49/42, B29C 49/68

(54) **HEIZEINRICHTUNG UND VERFAHREN ZUM HEIZEN VON VORFORMLINGEN**

(30) Priorität: 27.11.2023 DE 102023133036
(71) Anmelder: KHS GmbH, 44143 Dortmund (DE)
(72) Erfinder: Linke, Michael, 44143 Dortmund (DE); Baumgarte, Rolf, 44143 Dortmund (DE); Gerhards, Martin, 44143 Dortmund (DE)
(74) Vertreter: Andrejewski - Honke Patent- und Rechtsanwälte Partnerschaft mbB

(57) **Zusammenfassung**

Die Erfindung betrifft eine Umrüstbare Heizanordnung (4) für Vorformlinge (3) mit einer Transportvorrichtung (8) zum Transportieren der Vorformlinge von einem Eingabebereich (A) zu einem Ausgabebereich (B) entlang zumindest einer Heizstrecke (I, II), mit einer Vielzahl von in einer Transportrichtung (T) umlaufend bewegbaren Transporteinheiten (9), welche jeweils eine um eine Rotationsachse (r) drehbare Halterung (9a) zur Aufnahme jeweils eines Vorformlings (3), ein mit der Halterung (9a) drehgekoppeltes Ritzel in einer ersten Funktionsebene (F₁) und einen zu der Rotationsachse (r) exzentrischen Mitnehmer in einer zweiten Funktionsebene aufweist (F₂). Die Drehstellung der Halterung (9a) ist zwischen dem Eingabebereich (A) und dem Ausgabebereich (B) durch zumindest eine mit dem Ritzel (9b) und/oder dem Mitnehmer (9d) gekoppelte Zwangsführungsvorrichtung durchgängig festgelegt. Die Zwangsführungsvorrichtung umfasst zumindest eine entlang der Heizstrecke (I, II) ortsfest in der ersten Funktionsebene (F₁) an der Transportvorrichtung (8) angeordnete und mit dem Ritzel (9b) im Eingriff stehende Zahnstange (16, 18) und zumindest eine mit dem Mitnehmer (9d) gekoppelte Führungsnut (13a, 14a, 15a, 15b). Erfindungsgemäß ist zumindest ein Austauschbereich (C) ausgebildet ist, in dem alternativ ein mit dem Ritzel (9b) kämmender Zahnstangenabschnitt (18) in der ersten Funktionsebene (F₁) oder eine mit dem Mitnehmer (9d) gekoppelte Führungsschiene (13) in der zweiten Funktionsebene (F₂) montierbar ist.

## Beschreibung

Die Erfindung betrifft eine Heizanordnung für Vorformlinge mit einer Transportvorrichtung zum Transportieren der Vorformlinge von einem Eingabebereich zu einem Ausgabebereich entlang zumindest einer Heizstrecke, mit einer Vielzahl von in einer Transportrichtung umlaufend bewegbaren Transporteinheiten, welche eine um eine Rotationsachse drehbare Halterung zur Aufnahme jeweils eines Vorformlings, ein mit der Halterung drehgekoppeltes Ritzel in einer ersten Funktionsebene und einen zu der Rotationsachse exzentrischen Mitnehmer in einer zweiten Funktionsebene aufweist. Die Drehstellung der Halterung ist zwischen dem Eingabebereich und dem Ausgabebereich durch zumindest eine mit dem Ritzel und/oder dem Mitnehmer gekoppelte Zwangsführungsvorrichtung durchgängig festgelegt. Die Zwangsführungsvorrichtung umfasst zumindest eine entlang der Heizstrecke ortsfest in der ersten Funktionsebene an der Transportvorrichtung angeordnete Zahnstange, welche mit dem Ritzel im Eingriff steht und zumindest eine mit dem Mitnehmer gekoppelte Führungsnut.

Die Erfindung betrifft das technische Gebiet der Blasformung, insbesondere Streckblasumformung, zu der Herstellung von Kunststoffbehältern. Dabei werden sogenannte Vorformlinge zunächst durch ein Spritzgussverfahren aus einem Kunststoffmaterial hergestellt, abgekühlt und vor einer weiteren Verarbeitung zwischengelagert. Dieses Verfahren ist insbesondere zur Herstellung von Behältern (Flaschen, Kanister etc.) aus Polyethylenterephthalat (PET) verbreitet. Diese zeichnen sich durch eine große mechanische Stabilität bei geringem Eigengewicht aus.

Die Bewegung der Transporteinheiten erfolgt im Allgemeinen in einer Horizontalebene, die sich senkrecht zu einer Vertikalrichtung erstreckt. Dabei bezeichnet die erste Funktionsebene denjenigen Höhenbereich, über den sich das Ritzel erstreckt. In dieser "Ebene" angeordnete Elemente können mit dem Ritzel wechselwirken. Ebenso stellt die zweite Funktionsebene auch denjenigen Höhenbereich ab, in dem ein Eingriff mit dem Mitnehmer möglich ist. Die Transportrichtung bezeichnet diejenige (lokale) Bewegungsrichtung einer Transporteinheit an einer bestimmten Position des Transportwegs. Unter der Drehstellung ist die relative Positionierung des Halters bzw. eines daran gehaltenen Vorformlings zu der lokalen Transportrichtung zu verstehen. Zwangsführung meint dann, dass die Drehstellung und die relative Drehung bei einer Transportbewegung vorherbestimmbar festgelegt sind.

Die Vorformlinge weisen im Allgemeinen eine im Wesentlichen runde bzw. rotationssymmetrische Form um eine Längserstreckungsachse auf. Sie bilden eine Wandung aus dem Kunststoffmaterial, welche einen Innenraum umschließt. Dieser Innenraum hat zunächst noch nicht die für die spätere Verwendung notwendigen Form und Abmessungen. Er ist einzig über eine Zugangsöffnung erreichbar, welche häufig bereits mit einer spritzgeformten Außenform versehen ist. Diese weist bereits einen an die spätere Verwendung angepassten Halsabschnitt auf und kann insbesondere eine Verschlussaufnahme, einen Tragegriff und/oder ein Gewinde aufweisen.

Um den Vorformling in seine spätere Form bringen zu können, muss das Kunststoffmaterial zumindest im Bereich der den Innenraum begrenzenden Wandung über eine geeignete Umformtemperatur erwärmt werden. Je nach verschwendetem Material liegt diese üblicherweise im Bereich von ca. 80 °C bis ca. 180 °C. Um diese Temperierung zu erreichen, werden die Vorformlinge einer Heizeinrichtung zugeführt, von der die Erfindung ausgeht. Diese kann allgemein auch als "Ofen" oder nach dem zentralen Bestandteil auch "Heizstrecke" bezeichnet werden.

Zur Temperierung werden Vorformlinge im Allgemeinen mit ihrer Lagertemperatur (Raumtemperatur/Umgebungstemperatur) fortlaufend der Heizeinrichtung zugeführt und in dem Eingabebereich an die Transporteinrichtung übergeben. Dazu werden die Vorformlinge vereinzelt und sukzessive in die Halterungen der Transporteinheiten eingesetzt. Mit den Transporteinheiten durchlaufen die Vorformlinge zumindest eine Heizstrecke, bevor sie in dem Ausgabebereich von den Halterungen entfernt und dem Umformprozess zugeführt werden.

Heizstrecken weisen jeweils Heizelemente auf, welche auf diesen Bereich durchfahrende Vorformlinge wirksam sind. Diese sind bevorzugt beidseitig des Transportweges angeordnet, wobei sowohl Bauformen mit einem einzigen aktiven Heizelement (Infrarotstrahler) und einem gegenüberliegend angeordneten Reflektor oder beidseitig angeordneten aktiven Heizelementen Verwendung finden.

Die erwärmten Vorformlinge werden - möglichst schnell, um einen Temperaturverlust zu vermeiden - an eine Umformmaschine übergeben. Dabei handelt es sich insbesondere um eine sogenannte Blasmaschine oder Streckblasmaschine. Die temperierten Vorformlinge werden dazu in eine Außenform eingegeben und anschließend innenseitig - im Bereich des Innenraums - durch ein Fluid mit Überdruck beaufschlagt. Hierbei kann es sich insbesondere um Luft handeln. Es ist jedoch auch denkbar, eine Flüssigkeit, insbesondere das später in dem Behälter aufzunehmende Produkt als Blasfluid zu verwenden. Zusätzlich kann die Umformung des Vorformlings durch mechanische Belastung, insbesondere mit einer sogenannten Reckstange unterstützt werden. Dieser Prozess wird auch als Streckblasprozess bezeichnet.

Die Temperierung der Vorformlinge kann insbesondere auch eine räumliche Komponente aufweisen. Sofern aus den Vorformlingen Behälter von einem nicht-runden - z. B. vieleckigen oder ovalen - Querschnitt hergestellt werden sollen, müssen zur Erlangung einer hinreichend gleichmäßigen Behälter-Wandstärke die Vorformlinge vor der Umformung ungleichmäßig beheizt werden. Dieses Verfahren wird auch als "preferential heating" (PH) bezeichnet. Insbesondere erfolgt die Erwärmung der Vorformlinge dabei ungleichmäßig in Umfangsrichtung (um die Längserstreckungsachse).

Während bei Heizeinrichtungen für den "Standardbetrieb", d.h. für (nahezu) runde Behälter, eine in Umfangsrichtung möglichst gleichförmige Erwärmung durch beständige Rotation der Vorformlinge während des Erwärmens erzielt werden soll, haben Heizeinrichtungen für das PH-Verfahren zumindest teilweise Heizstrecken, bei denen keine Rotation der Vorformlinge stattfindet. Durch entsprechend ein- oder beidseitig des Transportweges angeordnete Heizelemente erfolgt an den diesen zugewandten Seiten der Vorformlinge eine stärkere Erwärmung als senkrecht dazu - d.h. in bzw. entgegen der Transportrichtung.

Derartige Heizeinrichtungen und Heizverfahren sind aus dem Stand der Technik bereits seit längerem bekannt. Beispielsweise zeigt DE 10 2016 004 405 B4 eine Heizeinrichtung für ein PH-Verfahren, bei der in einem ersten Bereich die Vorformlinge durch einen ersten mit einem Ritzel kämmenden Treibriemen gedreht werden und in einem zweiten Bereich durch einen mit den Ritzel kämmenden und mit der Transportrichtung mitlaufenden zweiten Zahnriemen drehfesten - d. h. mit einem konstanten Winkel zwischen der lokalen Transportrichtung und der Ausrichtung der Vorformlinge - gehalten werden. Dadurch kann zunächst eine umlaufend gleichförmige Grund-Erwärmung der Vorformlinge erfolgen, wonach durch eine separate zweite Heizstrecke ein spezifisches Temperaturprofil aufgeprägt wird. Die Druckschrift offenbart ferner, zur Umstellung von preferential heating auf standardmäßige Erwärmung den zweiten Zahnriemen mit von der Transportgeschwindigkeit abweichende Geschwindigkeit - d. h. insbesondere nicht oder gegenläufig dazu - zu bewegen. Die dadurch hervorgerufene Rotation der Vorformlinge auch im zweiten Bereich führt zu einer vollständigen gleichmäßigen Erwärmung, welche für runde Behälter geeignet ist.

Als Alternative dazu lehrt DE 10 2021 133 783 A1 ein Verfahren, bei dem in dem zweiten Heizbereich sowohl die Möglichkeit besteht, eine feste Drehposition der Vorformlinge einzustellen oder einen Antrieb zum Drehen der Vorformlinge einzukuppeln umso ebenfalls die Umstellung zwischen preferential heating und standardmäßiger Erwärmung darstellen zu können.

Mit diesen Ansätzen ist jedoch nicht immer allen Anforderungen an die Produktionsergebnisse zu genügen. Gerade bei nicht-runden Behälterformen - wie diese häufig mit einem preferential heating hergestellt werden - kommt es vermehrt auch auf die korrekte Positionierung des beim Blasformen nicht veränderten Halsabschnitts zu der im Blasformprozess umgeformten Wandung an. Die an dem Halsabschnitt angeordneten Verschlussaufnahmen bzw. Gewinde bestimmen im zusammengesetzten Zustand die Orientierung eines darauf aufgebrachten Verschlusses oder Applikators - beispielsweise eines Sprühkopfes. Es ist wichtig, dass dieser beim fertigen Produkt eine zu der (unrund ausgebildeten) Außenform des fertigen Produkts korrekte Orientierung hat. In der Vergangenheit musste daher die Ausrichtung der Vorformlinge vor dem Durchlaufen der Heizstrecke für das preferential heating aufwendig erfasst und gegebenenfalls korrigiert werden.

Um dieses Problem zu lösen wird in der DE 10 2022 100 090 A1 - von der die Erfindung ausgeht - vorgeschlagen, die Drehbewegung bzw. den rotationslosen Transport der Vorformlinge zwischen dem Eingabebereich und dem Ausgabebereich durch eine mechanische Zwangsführung an jedem Punkt vorherbestimmbar festzulegen. Bei einer bestimmten Orientierung eines aufgegebenen Vorformlings im Eingabebereich relativ zu dem Halter ist damit bereits festgelegt, in welcher Orientierung der die Heizeinrichtungen insbesondere zum preferential heating durchläuft und in welcher Orientierung er den Ausgabebereich erreicht. Eine aufwändige und fehleranfällige Erfassung und/oder Kontrolle der Orientierung der Vorformlinge kann daher entfallen. Nachteilig ist jedoch, dass eine derartig mechanisch vollständig bestimmte Heizeinrichtung ausschließlich für den PH-Betrieb einsetzbar ist.

Vor diesem Hintergrund liegt der Erfindung die Aufgabe zugrunde, eine Heizeinrichtung zur mechanisch bestimmten PH-Erwärmung anzugeben, welche mit geringem Aufwand für einen Standardheizbetrieb umgerüstet werden kann. Gleichzeitig soll dabei eine aufwändige Erfassung der Ausrichtung der Vorformlinge entfallen.

Gegenstand der Erfindung und Lösung dieser Aufgabe ist eine Heizvorrichtung nach Anspruch 1, eine Anlage zum Herstellen von Behältern aus Vorvormlingen nach Anspruch 17 sowie Verfahren zum Umrüsten nach den Ansprüchen 19 und 20. Bevorzugte Ausgestaltungen sind in den abhängigen Unteransprüchen angegeben.

Erfindungsgemäß ist - insbesondere in dem Heizbereich - zumindest ein Austauschbereich ausgebildet, in dem alternativ ein mit dem Ritzel kämmender Zahnstangenabschnitt in der ersten Funktionsebene oder eine mit dem Mitnehmer gekoppelte Führungsschiene in der zweiten Funktionsebene montierbar ist. Die gegeneinander austauschbare Führungsschiene und Zahnstangenabschnitt bilden in dem Austauschbereich als Alternativen zueinander einen Abschnitt der Zwangsführungsvorrichtung. Dadurch kann auch eine "zwangsgeführte" Heizanordnung - in dem Austauschbereich - flexibel zwischen dem "Standardbetrieb" und dem preferential heating umgerüstet werden. Die Heizvorrichtung ist nicht für den Betrieb ohne eine der beiden Alternativen vorgesehen.

Vorzugsweise ist eine Phaseneinstellvorrichtung vorgesehen. Diese ist dazu eingerichtet, die Drehstellung sämtlicher in dem Austauschbereich befindlichen Transporteinheiten für einen (rotativen) Standardbetrieb auszurichten. Dabei wird berücksichtigt, dass die Transporteinheiten in dem Austauschbereich aufgrund des vorangegangenen PH-Betriebs in einer Orientierung ausgerichtet sind. Durch die Korrektur der Drehstellungen sämtlicher Transporteinheiten in dem Austauschbereich kann die Heizeinrichtung anschließen nahtlos weiterbetrieben werden. Das ist insbesondere dann von Vorteil, wenn die Zwangsführung nicht nur zwischen dem Eingabebereich und dem Ausgabebereich, sondern vollständig umlaufend verwirklicht ist. Dann sind nämlich in der Regel auch keine "Fangkurven" vorgesehen, welche die Drehstellung von einem unbestimmten Zustand in eine definierte Phasenlage überführen.

Zweckmäßigerweise ist die Phaseneinstellvorrichtung bevorzugt als Schablone - d.h. als mechanische Ausrichtungshilfe - ausgestaltet. Diese weist eine Außenform dergestalt auf, dass eine Positionierung in dem und/oder Verschiebung in den Austauschbereich dazu führt, dass die darin befindlichen Transporteinheiten ausgerichtet werden. Insbesondere erfolgt die Positionierung bzw. Verschiebung dabei in der zweiten Funktionsebene, sodass eine Wechselwirkung zwischen der Außenform und den Mitnehmern der in dem Austauschbereich befindlichen Transporteinheiten erfolgt.

Bei der Außenform handelt es sich vorzugsweise um eine sogenannte Zykloide bzw. Trochoide. Diese mathematischen Kurven bezeichnen allgemein die Trajektorie an einem Wälzkörper exzentrisch zu dessen Rotationsache angeordneter Punkte, welche diese entlang des Abrollweges des Wälzkörpers beschreiben. Im Rahmen dieser Anmeldung ist Zykloide nicht im mathematischen strikten Sinn zu verstehen, sondern funktional in Bezug auf die vorliegende Anwendung. Da der Mitnehmer in der ersten Funktionsebene nicht Punktförmig ist, sondern eine zweidimensionale Fläche in Anspruch nimmt, ist auch der Terminus "Zykloide" als zweidimensionale Spur in der ersten Funktionsebene aufzufassen, welche einen Mitnehmer einer Transporteinheit überstreicht, wenn dessen Ritzel phasenrichtig mit einer Zahnstange im Eingriff steht und an dieser abrollt. Die Führungsbahn für den Mitnehmer in einem Übergabebereich - bei dem gleichzeitig in der ersten Funktionsebene und in der zweiten Funktionsebene ein Eingriff besteht - muss dieser Form gegebenenfalls mit Toleranzen entsprechen, damit es nicht zu einer Blockierung der konkurrierenden Zwangsführungen kommt.

Die Schablone ist insbesondere dazu eingerichtet die Mitnehmer entlang der Zykloide auszurichten. Dazu weist weist die Außenform besonders bevorzugt eine Gestalt auf, welche einer Randkurve dieser (flächigen) Zykloide entspricht. Dabei können insbesondere Toleranzen im Bereich von einigen Millimetern berücksichtigt werden.

Besonders bevorzugt weist die Phaseneinstellvorrichtung an einer Seite eine dem Verlauf des Transportwegs in dem Austauschbereich entsprechende, insbesondere gerade Kante auf. Diese Kante ist vorzugsweise gegenüber einer zykloiden Form angeordnet. Die Kante kann dazu verwendet werden, sämtliche Transporteinheiten in dem Austauschbereich gleichmäßig - d. h. mit einer identischen Drehstellung auszurichten. Diese Ausrichtungshilfe kann auf zweierlei Arten genutzt werden: Einerseits lassen sich sämtliche Transporteinheiten durch ein Einschieben quer zur Transportrichtung einheitlich (auf einen Totpunkt des Mitnehmers) ausrichten. Alternativ kann die Schablone auch lediglich als Anschlag genutzt werden, mit dem die einzelnen Mitnehmer (manuell oder automatisiert) in Anlage gebracht werden.

Vorzugsweise ist die Phaseneinstellvorrichtung flach ausgebildet. Diese weist in der Transportrichtung und einer dazu in der Horizontalebene quer verlaufenden Querrichtung jeweils eine größere, insbesondere fünffach größere Erstreckung auf als in der auf beiden senkrecht stehenden Vertikalrichtung. Besonders bevorzugt weist die Schablone in der Vertikalrichtung eine Erstreckung zwischen 5 mm und 25 mm auf.

Vorzugsweise ist die Schablone in der zweiten Funktionsebene in den Austauschbereich einschiebbar. Hierzu sind an der Heizvorrichtung insbesondere Führungen vorgesehen, an denen die Schablone gehalten ist und in der Funktionsebene in Richtung der Mitnehmer eingeschoben werden kann. Dadurch wird die Ausrichtung erheblich vereinfacht.

Alternativ oder zusätzlich kann vorgesehen sein, dass die Schablone mit dem Zahnstangenabschnitt verbunden ist. Dabei sind diese insbesondere derart verbunden, dass die Schablone beim Positionieren des Zahnstangenabschnitts in der ersten Funktionsebene in der zweiten Funktionsebene angeordnet ist.

Ganz besonders bevorzugt gelangt dabei die Schablone mit den Mitnehmern in dem Austauschabschnitt in Kontakt, bevor der Eingriff zwischen dem Zahnstangenabschnitt und den Ritzeln entsteht.

Besonders bevorzugt weist der Austauschbereich in der Transportrichtung eine Länge auf, welche einem ganzzahligen Vielfachen der Abrolllänge des Ritzels entspricht. Die "Abrolllänge" bezeichnet dabei diejenige Erstreckung, innerhalb derer das Ritzel an einer zugeordneten Zahnstange bzw. Zahnstangenabschnitt einmal vollständig abrollen kann. Bei einer Transportbewegung entlang der Transportrichtung um eine Abrolllänge vollführt das Ritzel - und damit auch der Mitnehmer sowie die Halterung - eine vollständige Drehung um die Rotationsachse. Die Bemessung der Austauschstrecke auf ein Vielfaches der Abrolllänge erleichtert die Umrüstung von einer Preferential-heating-Konfiguration auf eine determinierte Rotationsbewegung und zurück. Es wird dabei sichergestellt, dass die Drehstellung/Phasenlage bei Eintritt in den Austauschbereich dieselbe ist wie beim Austritt daraus - unabhängig davon, ob preferential heating oder ein rotativer Heizbetrieb vorgesehen wird.

Um den Austausch zu vereinfachen ist vorzugsweise vorgesehen, dass sich der Zahnstangenabschnitt nicht über den Austauschbereich hinaus erstreckt. Vielmehr endet der Zahnstangenabschnitt ohne Überlappung stumpf an dessen Ende. Ist der Zahnstangenabschnitt aus der zweiten Funktionsebene entnommen, läuft das Ritzel damit innerhalb des Austauschbereichs frei.

Gemäß einer bevorzugten Ausgestaltung ist der Zahnstangenabschnitt an der Heizeinrichtung zwangsgeführt befestigt. Dadurch ist es möglich, den Zahnstangenabschnitt nach der Entfernung aus der zweiten Funktionsebene in eine Lagerposition zu bewegen. Durch die Zwangsführung wird gewährleistet, dass die Zahnstange bei einer anschließenden Rückführung in die zweite Funktionsebene korrekt positioniert und ausgerichtet ist.

Besonders bevorzugt ist der Zahnstangenabschnitt mit zumindest einem Schwenkarm klappbar an der Transportvorrichtung befestigt. Insbesondere ist der Schwenkarm um eine in einer Horizontalebene verlaufende Schwenkachse drehbar mit der Transportvorrichtung verbunden. Ganz besonders bevorzugt verläuft die Schwenkachse dabei parallel zu der (lokalen) Transportrichtung in dem Austauschbereich. Somit kann der Zahnstangenabschnitt, wenn dieser aus der ersten Funktionsebene entfernt wird, in eine Lagerposition insbesondere nach oben verschwenkt werden. Um das Einführen der Ritzel bei der Montage des Zahnstangenabschnitts zu vereinfachen, kann dessen Zahnprofil vorzugsweise mit Einführschrägen an den Zahnzwischenräumen ausgebildet sein.

Bevorzugt sind der Zahnstangenabschnitt, die Führungsschiene und/oder deren Halterungen an der Transportvorrichtung derart ausgestaltet, dass eine gleichzeitige Montierung in dem Austauschbereich ausgeschlossen ist. Insbesondere ist die Führungsschiene derart ausgestaltet, dass der Zahnstangenabschnitt bei eingelegter Führungsschiene nicht montiert, insbesondere nicht heruntergeklappt werden kann. Ebenso ist der Aufnahmeraum für die Führungsschiene bei einem installierten Zahnstangenabschnitt nicht zugänglich. Hierdurch wird ein Maschinenschaden durch eine gleichzeitige widersprüchliche Zwangsführung sicher ausgeschlossen.

Bevorzug werden die Führungsschiene und der Zahnstangenabschnitt mit Befestigungsmitteln, insbesondere Schrauben an der Transportvorrichtung montiert. Als zusätzliche Sicherung gegen eine gleichzeitige Montage von Führungsschiene und Zahnstangenabschnitt kann dabei vorgesehen sein, dass dieselben Befestigungsmittel und/oder dieselben Aufnahmen für die Befestigungsmittel sowohl für den Zahnstangenabschnitt als auch für die Führungsschiene verwendet werden.

Im Allgemeinen ist die Führungsschiene für den PH-Betrieb gerade ausgebildet. Hierdurch wird die Position des Mitnehmers in der Querrichtung beim Durchlaufen des Austauschbereichs nicht verändert. Dadurch wird die maximal erzielbare Fokussierung der Heizenergie auf die Außenseiten ermöglicht.

Es ist jedoch ebenfalls denkbar, einen geschwungenen bzw. ondulierenden Verlauf der Führungsnut der Führungsschiene vorzusehen, sodass zumindest geringfügige oszillierende Drehbewegungen während des Durchlaufens des Austauschbereichs ausgeführt werden. Hierdurch wird das aufgeprägte Temperaturprofil gegenüber einer geraden Führungsnut geringfügig vergleichsmäßigt ohne hierbei jedoch den Effekt des preferential heating zu beeinträchtigen.

Gemäß einer besonders bevorzugten Ausgestaltung weist die Heizstrecke mehrere hintereinander angeordnete Austauschbereiche an. Diese können bevorzugt unmittelbar aneinander anschließen. In den mehreren Austauschbereichen ist es jeweils möglich lokal einen Zahnstangenabschnitt aus der ersten Funktionsebene zu entfernen und durch eine Führungsschiene in der zweiten Funktionsebene zu ersetzen - und umgekehrt. Damit ist eine zusätzliche Variabilität bei der Ausgestaltung des Heizprozesses möglich. Beispielsweise kann in einem ersten Austauschbereich zunächst ein preferential heating vorgesehen sein, um anschließend in einem zweiten Austauschbereich eine abschließende, gleichmäßige Erwärmung der äußersten Schicht zu betreiben. Ebenso ist es denkbar zunächst in dem ersten Austauschbereich im Betrieb mit einem Zahnstangenabschnitt eine konventionelle, in Umfangsrichtung gleichmäßige Erwärmung vorzusehen und nur in dem zweiten Austauschbereich eine PH-Führung zu verwirklichen.

Gemäß einer weiteren bevorzugten Ausgestaltung der Erfindung ist es möglich, dass die umrüstbare Heizvorrichtung entlang des Transportwegs mehrere Heizstrecken umfasst, wobei davon eine, mehrere oder sämtliche mit ein oder mehreren Austauschbereichen ausgebildet sind, in denen jeweils ein Zahnstangenabschnitt durch eine Führungsschiene austauschbar ist. Dadurch lässt sich die Heizvorrichtung in den Austauschbereichen jeweils flexibel zwischen Standardheizbetrieb und preferential heating umrüsten.

Durch die relative Anzahl und Reihenfolge der unterschiedlichen Heizmethoden lassen sich die Temperaturverläufe innerhalb des erwärmten Vorformlings noch vielfältiger beeinflussen. Die durchgängige Zwangsführung garantiert dabei gleichmäßige und reproduzierbare Ergebnisse. Auch das PH in einer vorgelagerten Heizstrecke oder einem vorgelagerten Austauschabschnitt hat - trotz einer nachgelagerten rotativen Heizung einen hinsichtlich der Ausrichtung definierten Effekt auf das Temperaturprofil bei der Entnahme in dem Ausgabebereich.

Besonders bevorzugt weist die Heizeinrichtung zumindest eine Phasenüberprüfungsvorrichtung auf. Diese ist besonders bevorzugt an einer Position entlang des Transportweges in dem Bereich von dem (ersten) Austauschabschnitt bis zu dem Ausgabebereich angeordnet.

Die Phasenüberprüfungsvorrichtung ist dazu eingerichtet die korrekte Phasenlage der Transporteinheiten - d. h. die korrekte, vorherbestimmte Drehverstellung an einer vorgegebenen Position des Transportweges - zu verifizieren. Sollte trotz der Verwendung einer Phaseneinstellvorrichtung (Schablone) beim Umrüsten eine Fehlpositionierung einer oder mehrerer Transporteinheiten erfolgt sein - beispielsweise aufgrund einer geometrischen Doppeldeutigkeit in der Beziehung zwischen Schablonenkurve und den möglichen Positionen des jeweiligen Mitnehmers - kann so eine potentiell katastrophale Beschädigung der Heizeinrichtung bzw. der Zwangsführungen verhindert werden.

Auch kann die Phasenüberprüfungsvorrichtung dazu genutzt werden, Fehlpositionierung aus anderen Gründen, beispielsweise aufgrund von Verschleiß an Ritzel und/oder Zahnstange, zu erkennen. Die Phasenüberprüfungsvorrichtung ist zweckmäßigerweise dazu eingerichtet, eine Notabschaltung der Transportvorrichtung, der Heizanordnung und gegebenenfalls einer damit gekoppelten Behälterumformvorrichtung auszulösen. Sie kann daher auch als "Unterbrechungsschalter" bezeichnet werden.

Besonders bevorzugt ist an der Position der Phasenüberprüfungsvorrichtung eine rotative Zwangsführung - d. h. eine Wechselwirkung zwischen Ritzel und einer zugeordneten Zahnstange - vorgesehen. Diese weist insbesondere eine Tastkurve auf, welche die Bewegung ein oder mehrerer Elemente der Transporteinheiten auf geometrische Weise überprüft.

Vorzugsweise weist die Phasenüberprüfungsvorrichtung eine Tastkurve auf, welche zumindest Teile einer Zykloide abbildet. Die Tastkurve ist dabei vorzugsweise derart angeordnet, dass der Mitnehmer einer korrekt rotierenden und die richtige Phasenlage aufweisenden Transporteinheit - d. h. im Normalbetrieb - berührungsfrei abrollt. Unterbleibt die Rotation oder ist diese mit einem Phasenversatz zu der Sollbewegung ausgebildet, schneidet die Bewegung des Mitnehmers die Außenkurve und löst dadurch die Phasenüberprüfungsvorrichtung aus.

Um eine sichere Erkennung von Fehlern zu gewährleisten, ist die Tastkurve besonders bevorzugt mit einer Länge ausgebildet, welche zumindest einer vollständigen insbesondere zumindest der doppelten Abrolllänge entspricht.

Hierzu kann die Fehlererkennung anhand von einer bzw. zwei vollständigen Abwicklungen erfolgen, sodass die Gefahr reduziert ist eine Fehlpositionierung nicht zu erkennen.

In einer bevorzugten Ausführungsform ist die Tastkurve als Kante eines insbesondere blechförmigen Fühlers ausgebildet. Dieser ist mit einem die Kante ausbildenden Tastabschnitt in der zweiten Funktionsebene angeordnet. Bei Kontakt mit einem Mitnehmer wird der Tastabschnitt in oder aus der zweiten Funktionsebene verlagert.

Besonders bevorzugt schließt der Tastabschnitt gewinkelt an einen nach unten verlaufenden Tragabschnitt an. Aufgrund des Eigengewichts des Tastabschnitts wir diese dabei mit einem in Richtung der Tastkurve wirksamen Moments vorgespannt. Dieses muss insbesondere bei der Auslösung der Phasenüberprüfungsvorrichtung überwunden werden.

Der Fühler ist dabei (vorzugsweise an dem Tragabschnitt) um eine parallel zu der Transportrichtung verlaufende Fühlerschwenkachse angelenkt. Ein Schalter ist dabei so eingerichtet, bei einem Verlassen der Tastposition die Phasenüberprüfungsvorrichtung auszulösen. Hierdurch wird die Bewegung innerhalb der Transportvorrichtung unterbrochen, sodass der Fehler behoben und eine korrekte Positionierung hergestellt werden kann.

Besonders bevorzugt ist die Phasenüberprüfungsvorrichtung im Bereich des montierbaren und demontierbaren Zahnstangenabschnitts angeordnet. Ganz besonders bevorzugt ist sie mit diesem in einer Funktionseinheit verbunden und kann gemeinsam montiert und demontiert werden.

Bei Ausgestaltungen, bei denen sowohl der Zahnstangenabschnitt - gemeinsam mit der Phasenüberprüfungsvorrichtung - klappbar an der Transportvorrichtung gehalten ist als auch die Phasenüberprüfungsvorrichtung einen verschwenkbaren Fühler aufweist, sind die Schwenkachse und die Fühlerschwenkachse besonders bevorzugt zueinander parallel ausgerichtet. Durch diese Ausrichtung ist es möglich, dass sich der Fühler bei einem aus-der-Ebene-Schwenken und wieder Einschwenken des Zahnstangenabschnitts automatisch in der Tastposition orientiert und nur bei Kontakt mit einem Mitnehmer aus dieser wieder entfernt wird.

Die Zwangsführung innerhalb der erfindungsgemäßen Heizeinrichtung insbesondere ist zwischen dem Eingabebereich und Ausgabebereich derart vollständig wirksam, dass insbesondere keine "Fangeinrichtungen" vorgesehen sind, welche die Transporteinheiten aus einer undefinierten Drehstellung in eine definierte Drehstellung überführen. Vielmehr ist diese Drehstellung durchgängig durch eine Führung des Mitnehmers und/oder den Eingriff des Ritzels - mit mechanischen Toleranzen - exakt festgelegt.

Gegenstand der Erfindung ist auch eine Umformanlage zum Umformen von Vorformlingen zu Behältern mit einer Vorformlingzuführung und einer Behälterumformvorrichtung, insbesondere Streckblasmaschine. Erfindungsgemäß ist die Vorformlingzuführung an den Eingabebereich einer zuvor beschriebene Heizeinrichtung angeschlossen, deren Ausgabebereich an die Behälterumformvorrichtung angeschlossen ist. Durch die zuvor beschriebenen erfindungsgemäßen Merkmale ist die Heizeinrichtung und damit Umformanlage besonders leicht zwischen einem konventionellen Heizbetrieb und einem preferential-heating-Betrieb umrüstbar. Dadurch kann mit derselben Maschine eine breite Palette an runden und nicht-runden Behälterformen hergestellt werden.

Besonders bevorzugt weist die Behälterumformvorrichtung eine Vielzahl von Umformstationen mit jeweils einer Außenform auf. Die Umformstationen sind dazu eingerichtet, dass die erwärmten Vorformlinge in die Außenform eingebracht und darin durch Beaufschlagung mit Innendruck umgeformt werden. Zweckmäßigerweise sind die Außenformen austauschbar, um diese an eine angestrebte Formgebung des Behälters anzupassen.

Gegenstand der Erfindung ist auch ein Verfahren zum zumindest bereichsweisen Umrüsten einer zuvor beschriebenen Heizanordnung oder einer diese umfassenden Umformanlage. Dabei ist vorgesehen, dass die Transportvorrichtung zunächst in Stillstand versetzt wird, sofern diese nicht bereits still steht. Erfindungsgemäß wird zum Umrüsten der Heizeinrichtung in einem Austauschbereich zunächst eine Führungsschiene aus der zweiten Funktionsebene entfernt, die in dem Austauschbereich befindlichen Transporteinheiten ausgerichtet und anschließend der Zahnstangenabschnitt in der ersten Funktionsebene montiert. Damit wird die Heizanordnung in dem Austauschbereich vom preferential heating auf einen Standardheizbetrieb umgerüstet.

Bei einer weiteren Ausgestaltung des Verfahrens zum zumindest bereichsweisen Umrüsten einer zuvor beschriebenen Heizanordnung oder einer diese umfassenden Umformanlage, wird die Transportvorrichtung zunächst ebenfalls in Stillstand versetzt wird, sofern diese nicht bereits still steht. Danach wird zunächst die Zahnstange aus der ersten Funktionsebene demontiert, die Mitnehmer der in der Austauschstrecke befindlichen Transporteinheiten anschließend ausgerichtet und in die Führungsschiene eingeführt, welche anschließend an der Transportvorrichtung befestigt wird. Damit wird die Heizanordnung in dem Austauschbereich vom Standardheizbetrieb auf preferential heating umgerüstet.

Durch die vorliegende Erfindung ist es möglich, in einer Umformanlage die Vorteile einer zwangsgeführten Ausrichtung der Vorformlinge zu nutzen und gleichzeitig die flexible Umstellung zwischen einem Standardheizbetrieb und einem PH-Betrieb zu ermöglichen.

Besonders bevorzugt erfolgt die Ausrichtung der Transporteinheiten unter Zuhilfenahme eines zuvor beschriebenen Phaseneinstellmittels. Damit kann die benötigte Ausrichtung schnell, sicher und reproduzierbar durchgeführt werden.

Die Erfindung wird nachfolgend anhand von lediglich Ausführungsbeispiele darstellenden Figuren erläutert. Es zeigen dabei schematisch:
- Fig. 1: eine schematische Darstellung einer erfindungsgemäßen Umformanlage,
- Fig. 2: eine Schnittdarstellung eines einzelnen Vorformlings,
- Fig. 3: eine perspektivische Darstellung einer einzelnen Transporteinheit,
- Fig. 4A: eine unterseitige Schrägperspektive einer Transportvorrichtung gemäß einem ersten Ausführungsbeispiel,
- Fig. 4B: eine oberseitige Schrägperspektive entsprechend Fig. 4A,
- Fig. 4C: eine Ansicht entsprechend Fig. 4B in einer alternativen Konfiguration,
- Fig. 5A: eine Darstellung entsprechend Fig. 4C bei einem weiteren Ausführungsbeispiel,
- Fig. 5B: eine der Fig. 5A entsprechende unterseitige Perspektive,
- Fig. 6A: eine schematisierte Draufsicht auf eine Phasenüberprüfungsvorrichtung bei korrekter Phasenlage und
- Fig. 6B: eine perspektivische Darstellung der Phasenüberprüfungsvorrichtung als Schrägperspektive bei Auslösung.

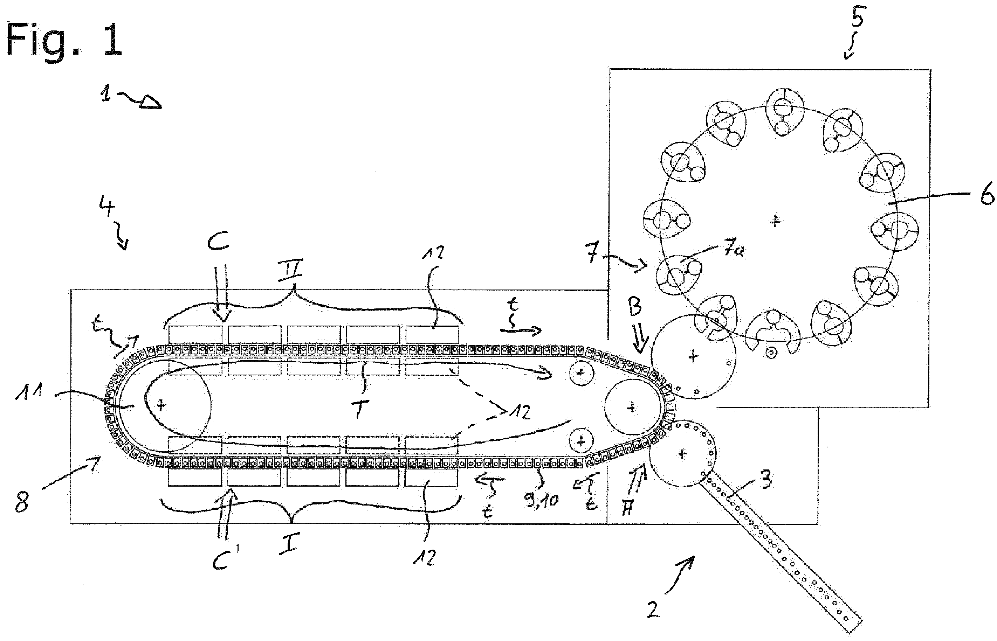

Die Fig. 1 zeigt schematisch den generellen Aufbau einer erfindungsgemäßen Umformanlage 1, welche sich grob in drei Abschnitte gliedert: Mit einer Vorformlingzuführung 2 werden einzelne Vorformlinge 3 einer erfindungsgemäßen Heizanordnung 4 zugeführt. Diese ist dazu eingerichtet einen fortlaufenden Strom an Vorformlingen 3 zu erwärmen und anschließend einer Umformmaschine 5 zuzuführen. Hierzu weist die Umformmaschine 5 eine Vielzahl von an Umfang eines sogenannten Blasrades 6 angeordnete Blasstationen 7 auf. In diesen werden die erwärmten Vorformlinge 3 durch einen mittels eines Mediums, insbesondere Luft, vermittelten Innendrucks entsprechend der durch die Blasstation 7 gebildeten Außenform 7a umgeformt.

Die Heizanordnung 4 weist eine Transportvorrichtung 8 auf, welche dazu eingerichtet ist, die Vorformlinge 3 von einem Eingabebereich A zu einem Ausgabebereich B entlang einer ersten Heizstrecke I und nachfolgend einer zweiten Heizstrecke II entlang eines Transportwegs T vorgesehen ist. Die Transportvorrichtung 8 weist dabei eine endlos umlaufende Kette aus Transporteinheiten 9 auf, welche dazu eingerichtet sind jeweils einen einzelnen Vorformling 3 entlang des Transportweges zu bewegen.

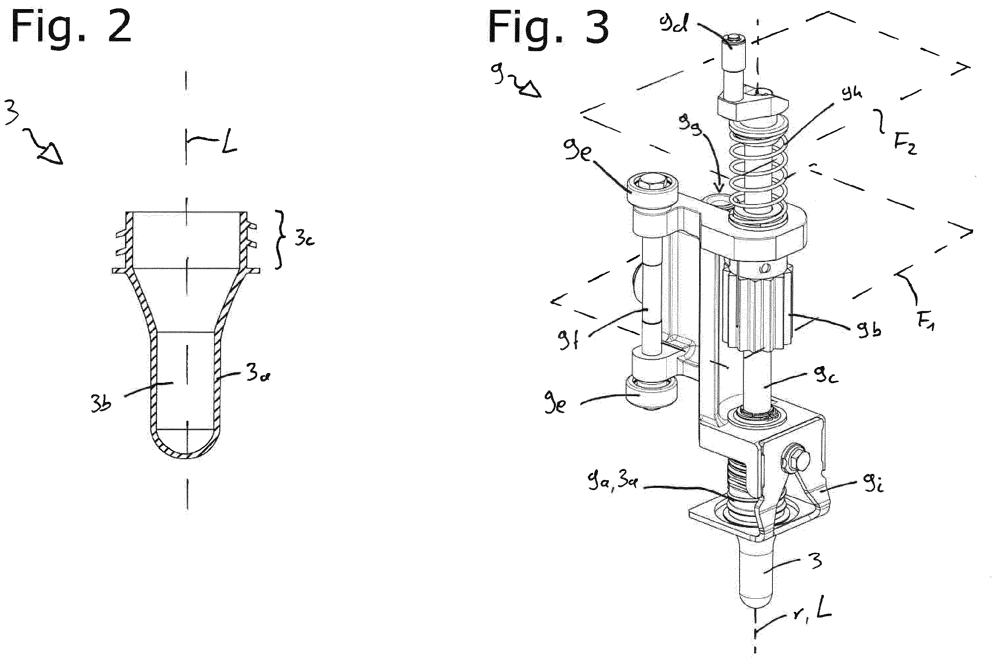

Der allgemeine Aufbau der Vorformlinge 3 wird in der Fig. 2 erläutert. Diese sind um eine Längserstreckungsachse L im Wesentlichen symmetrisch ausgebildet. Dabei umschließt eine Wandung 3a einen Innenraum 3b. Dieser ist über einen Halsabschnitt 3c von außen zugänglich, welcher von einer Symmetrie um die Längserstreckungsachse L abweichen kann. Der Halsabschnitt 3c ist im Ausführungsbeispiel mit einem Schraubgewinde für die spätere Verwendung ausgestaltet.

Die Fig. 3 zeigt den Aufbau einer möglichen Ausgestaltung einer Transporteinheit 9. Diese umfasst eine um eine Rotationsachse r drehbaren Halter 9a für einen Vorformling 3. Der Halter 9a weist dabei einen in den Halsabschnitt 3c des Vorformlings 3 eintauchenden Dorn auf, welcher kraft- und/oder reibschlüssig an dessen Innenseite abgestützt ist. Sowohl der Halter 9a als auch die Transporteinheit 9 werden in der Literatur manchmal auch als "Transportdorn" bezeichnet. In der dargestellten aufgesteckten Position fluchtet die Rotationsachse r mit der Längserstreckungsachse L des Vorformlings 3. Eine Drehbewegung des Halters 9a wird unmittelbar in einer Rotationsbewegung des Vorformlings 3 umgesetzt.

Weiterhin umfasst die Transporteinheiten 9 ein mit dem Halter 9a drehgekoppeltes Ritzel 9b, welches in einer ersten Funktionsebene F₁ angeordnet ist. Der Halter 9a und das Ritzel 9b sind mittels einer Welle 9c verbunden, an deren oberen Ende ebenfalls drehstarr gekoppelt ein Mitnehmer 9d in einer zweiten Funktionsebene F₂ angeordnet ist.

Zur Führung an der Transportvorrichtung 8 sind überdies Führungsrollen 9e ausgebildet, welche auf einem zu der Rotationsachse r parallel verlaufenden Stift 9f drehbar gelagert sind. Der Stift 9f dient gleichzeitig als Verbindung zu einer benachbarten Transporteinheit 9, indem dort eine zugeordnete Verbindungsöffnung 9g durchgegriffen wird. Die durch die Vielzahl von Transporteinheiten 9 gebildete endlos umlaufende Transportkette 10 ist in der Fig. 1 nur schematisch angedeutet.

Weiterhin zeigt die Fig. 3, dass die Welle 9c entlang der Rotationsachse r verschieblich an der Transporteinheit 9 gelagert ist. Dabei wird das Eigengewicht von einer Schraubenfeder 9h gehalten, sodass der Halter 9a mit dem daran gehaltenen Randabschnitt 3a des Vorformlings 3 innerhalb eines Schutzblechs 9i positioniert ist. Dieses dient dem Schutz gegen eine unbeabsichtigte Erwärmung.

Die Transportkette 10 von Transporteinheiten 9 wird zwischen dem ersten Heizabschnitt I und dem zweiten Heizabschnitt II durch ein Umlenkrad 11 gewendet. Dabei sind ferner sowohl im ersten Heizabschnitt I als auch im zweiten Heizabschnitt II schematisch Heizeinrichtungen 12 dargestellt, welche auf die in dem jeweiligen Heizabschnitt I,II befindlichen Vorformlinge 3 wirksam sind. In dem gezeigten Ausführungsbeispiel sind sowohl innenseitig als auch außenseitig aktive Heizeinrichtungen 12 vorgesehen. Damit wird eine maximale Flexibilität hinsichtlich des Heizbetriebs im ersten Heizabschnitt I und/oder im zweiten Heizabschnitt II gewährleistet, da sich beide gleichermaßen sowohl für einen gleichförmigen Standardheizbetriebes als auch für einen ungleichförmigen preferential-heating-Betrieb eignen.

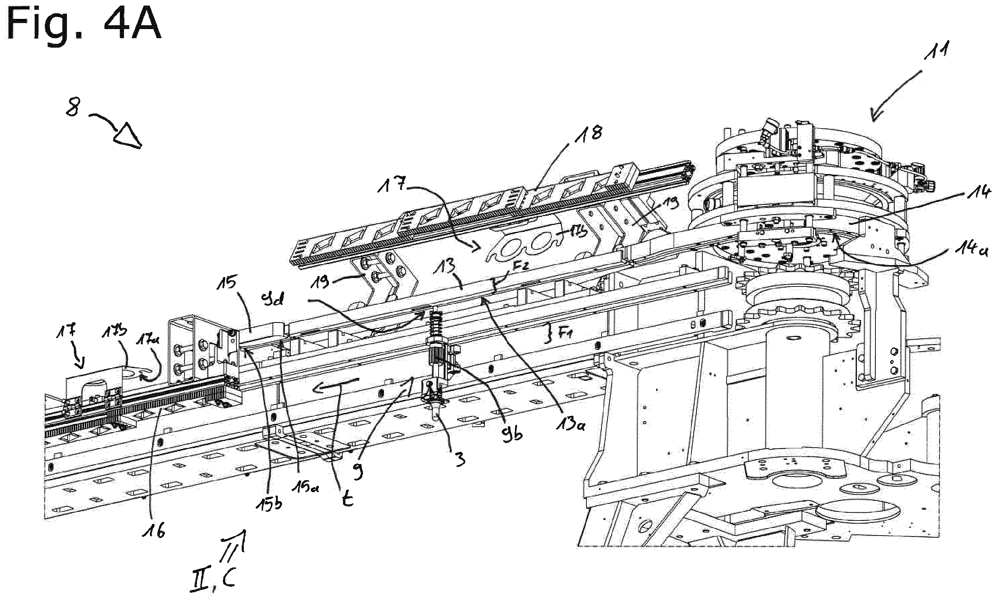

Die Fig. 4A zeigt in einer unterseitigen Perspektive einen Teil der Transportvorrichtung 8. Die Darstellung ist dabei stark vereinfacht und auf die wesentlichen Aspekte beschränkt. So ist von der umlaufenden Transportkette 10 lediglich eine einzige Transporteinheit 9 abgebildet, um deren Wechselwirkung mit der erfindungsgemäß ausgebildeten Zwangsführungsvorrichtung besser darstellen zu können. Die Fig. 4A zeigt den Blick auf einen Teil des zweiten Heizabschnitts II dargestellt. Ein Teil dieses zweiten Heizabschnitts II wird durch den erfindungsgemäßen Austauschbereich C gebildet.

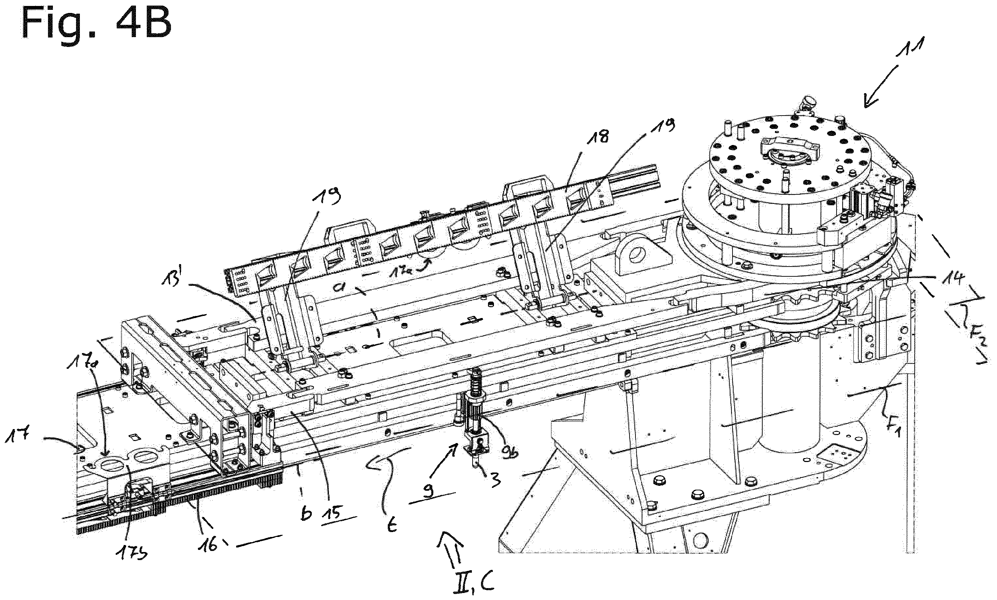

In den Figuren 4A und 4B ist der Austauschbereich C für einen preferential-heating-Betrieb eingerichtet. Dazu ist in der zweiten Funktionsebene F₂ eine Führungsschiene 13 mit einer darin ausgebildeten geradlinigen Führungsnut 13a ausgestaltet. In diese greift der Mitnehmer 9d der Transporteinheit 9 ein, wodurch die Drehposition des Vorformlings 3 festgelegt und bei einer Bewegung entlang des Transportwegs T zwangsgeführt ist.

Aus der Figur es ebenfalls erkennbar, dass die Drehposition zuvor beim Umlauf um das Umlenkrad 11 durch eine Umlaufschiene 14 mit einer darin angeordneten Nut 14a ebenfalls relativ zu der Transportrichtung festgelegt ist. Diese Führung reicht bis an die Führungsschiene 13 heran und übergibt beim Transport den Mitnehmer 9d unmittelbar in die Führungsnut 13a.

Stromabwärts, d.h. in Richtung des Ausgabebereichs B, wird der Mitnehmer 9d in eine Transformationsschiene 15 übergeben, deren Führungsnut einen ersten geradlinigen Bereich 15a und einen zweiten gekrümmten Bereich 15b aufweist, welcher teilweise die Form einer Zykloide hat. Hierdurch wird die zwangsgeführte rotationslose Bewegung in eine kontinuierliche Drehung übergeleitet, welche nachfolgend durch eine Kopplung zwischen dem Ritzel 9b und einer in der ersten Funktionsebene F₁ angeordneten Zahnstange 16 fortgesetzt wird. An der Zahnstange 16 ist eine Phasenüberprüfungsvorrichtung 17 angeordnet, deren Funktion nachfolgend noch näher erläutert wird.

Weiterhin ist in den Figuren 4A und 4B erkennbar, dass für den Austauschbereich C ein Zahnstangenabschnitt 18 vorgesehen ist, welcher sich in der Konfiguration gemäß den Figuren 4A und 4B außerhalb der ersten Funktionsebene F₁ befindet. Der Zahnstangenabschnitt 18 ist mittels zwei um eine längst des Transportwegs T verlaufende Schwenkachsen a schwenkbar mit der Transportvorrichtung 8 verbundenen Schwenkarmen 19 klappbar gelagert. An dem Zahnstangenabschnitt 18 ist weiterhin eine zweite Phasenüberprüfungsvorrichtung 17 angebracht.

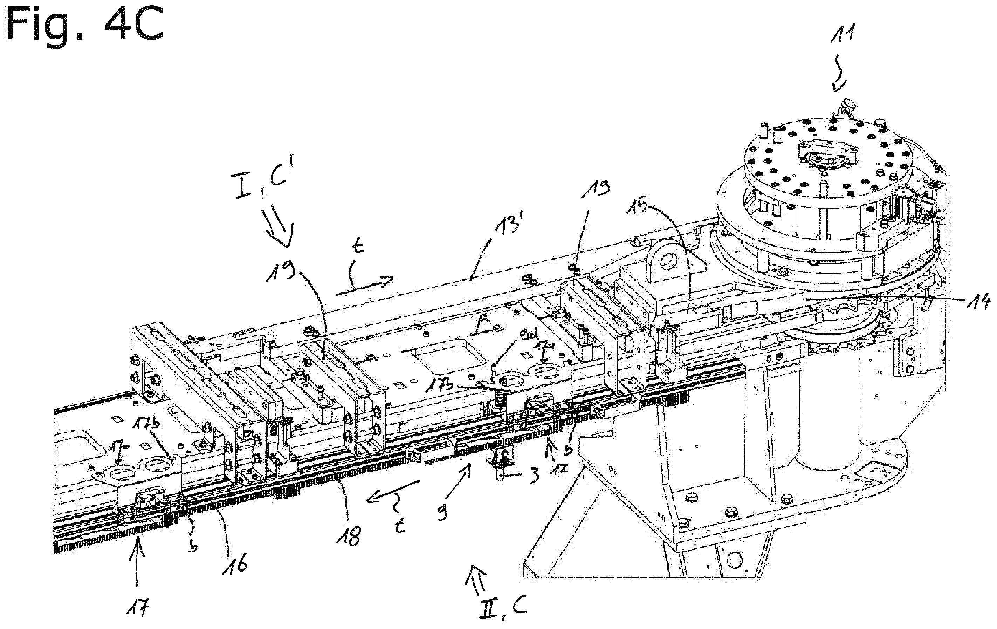

Die Fig. 4C zeigt eine alternative Konfiguration der Transportvorrichtung 8 aus den Figuren 4A und 4B. Dabei ist die Führungsschiene 13 aus der zweiten Funktionsebene F₂ entfernt und stattdessen der Zahnstangenabschnitt 18 in die erste Funktionsebene F₁ hinuntergeklappt. Hierdurch wird die Zwangsführung in dem Austauschbereich C auf eine rotative umgestellt. Zur phasenrichtigen Einleitung ist die Transformationsschiene 15 stattdessen an dem Bereich zwischen der Umlaufschiene 14 und dem Austauschbereich C versetzt worden. Deren Wirkung wird über die beiden Phasenüberprüfungsvorrichtungen 17 kontrolliert. Die Führungsschiene 13 ist aus dem Bereich der Transporteinrichtung 8 entfernt und nicht mehr deren Bestandteil.

Den beiden oberseitigen Darstellung der Figuren 4B und 4C überdies zu entnehmen, dass an der gegenüberliegenden Seite im Bereich der ersten Heizstrecke I ein zweiter Austauschbereich C' mit einer weiteren Führungsschiene 13' zum rotationsfreien PH-Betrieb angeordnet ist.

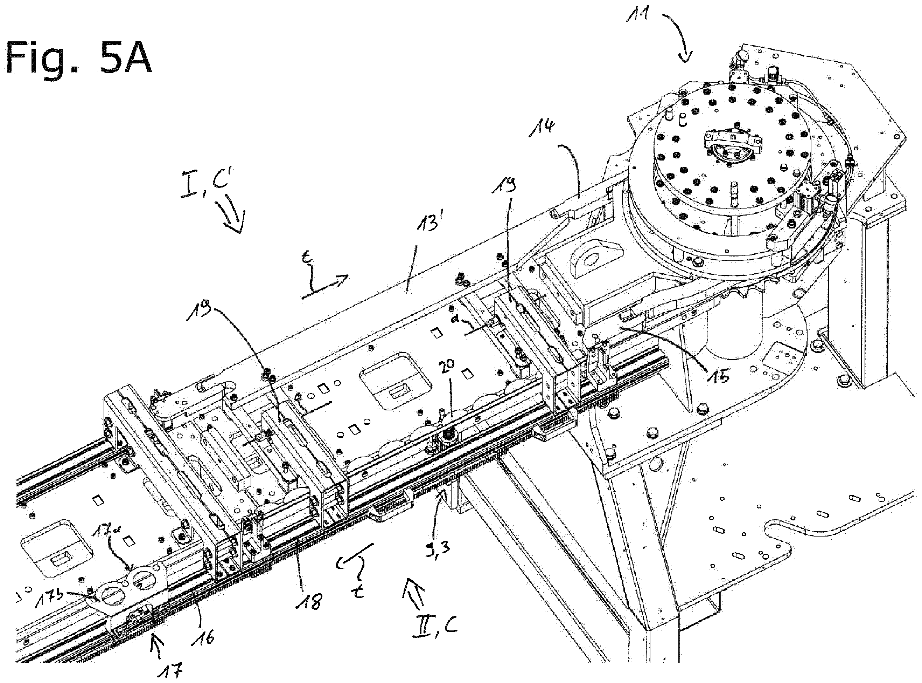

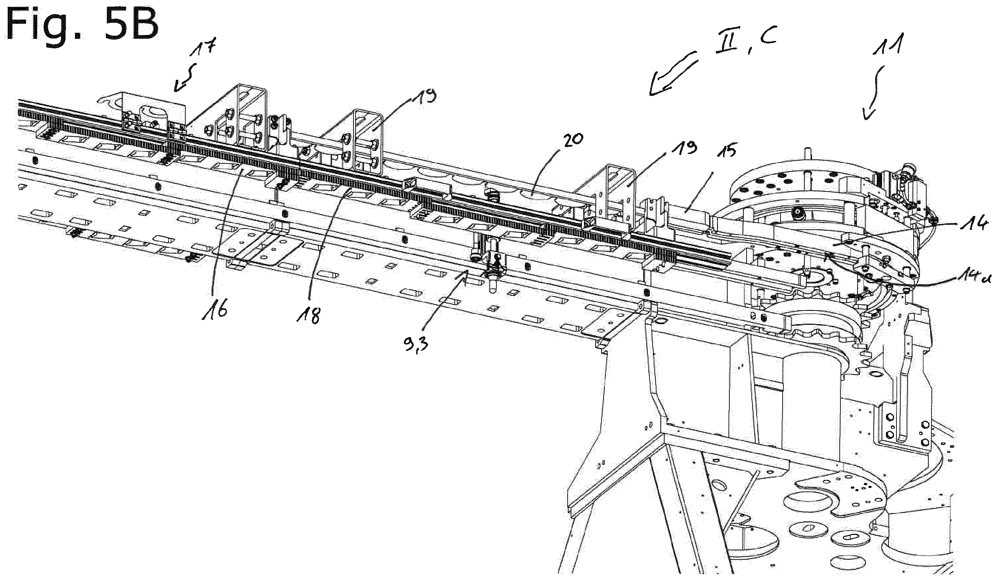

In den Figuren 5A und 5B eine alternative Ausführungsform der Transportvorrichtung 8 dargestellt. Dabei beziehen sich die Figuren ausschließlich auf die zweite Funktionsstellung, bei der der Zahnstangenabschnitt 18 in der ersten Funktionsebene F₁ für eine rotativ Zwangsführungen vorgesehen ist. Die Umrüstung für den PH-Betrieb erfolgt analog zu dem zuvor beschriebenen Ausführungsbeispiel.

Das in den Fig. 5A und 5B gezeigte Ausführungsbeispiel unterscheidet sich darin, dass eine Phaseneinstellvorrichtung 20 in Gestalt einer Zykloiden-Schablone vorgesehen ist. Obwohl diese auch separat eingesetzt werden kann, ist in dem dargestellten Ausführungsbeispiel fest mit den Schwenkarmen 19 für den Zahnstangenabschnitt 18 verbunden. Somit werden bei einem Herunterschwenken des Zahnstangenabschnitts 18 automatisch die jeweiligen Transporteinheiten 9 durch mechanischen Kontakt zwischen der Phaseneinstellvorrichtung 20 und den jeweiligen Mitnehmern 9 in die korrekte Phasenlage eingestellt. Die Wirkung dieser Ausrichtung wird nachfolgend durch eine Phasenüberprüfungsvorrichtung 17 im Bereich der Zahnstange 16 kontrolliert.

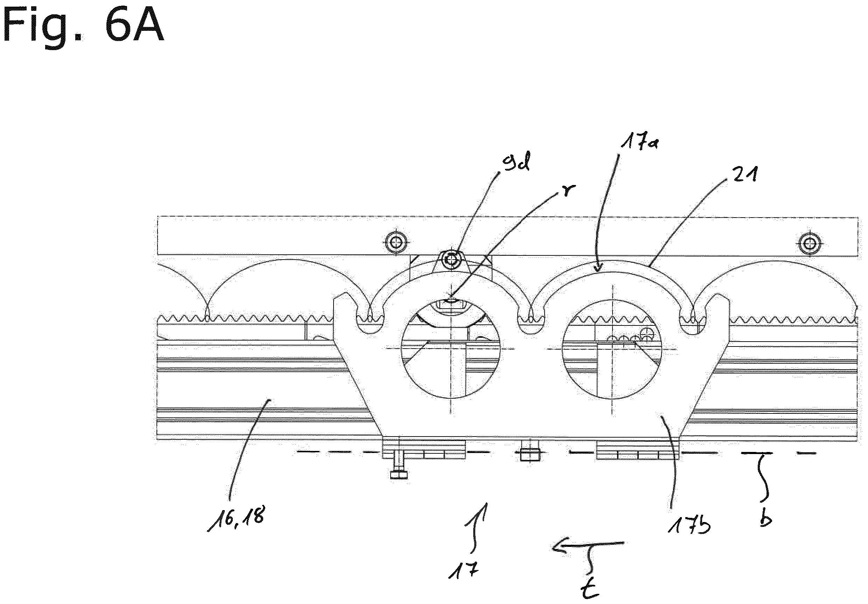

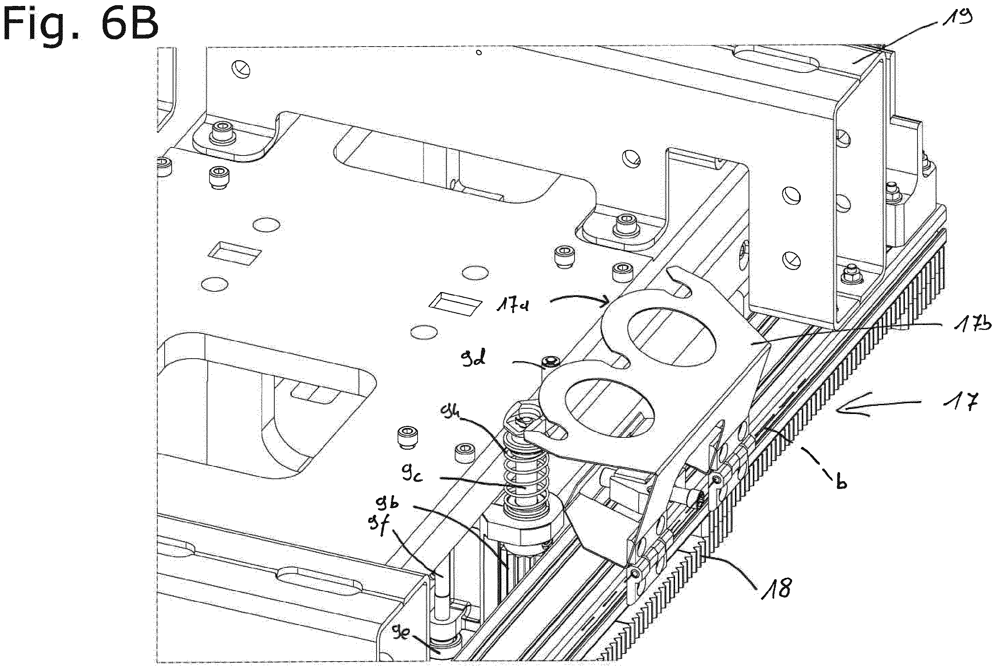

Die Funktion der Phasenüberprüfungsvorrichtungen 17 wird nachfolgend anhand einer vergleichenden Darstellung der Figuren 6A und 6B erläutert: Dabei zeigt die Fig. 6A in einer Draufsicht in schematischen Verlauf im Normalbetrieb. Dabei folgt der Mittelpunkt des Mitnehmers 9d einer Zykloide-Kurve 21, sodass dessen Querschnittsfläche eine zykloide Fläche überstreicht.

Zur Überprüfung weist die Phasenüberprüfungsvorrichtung 17 eine Außenkante 17a auf, welche auf der dem Mitnehmer 9d zugewandten Seite eine an die Zykloide angepasste Form aufweist. Diese Kurve wird durch einen Tastschenkel 17b eines blechförmigen Fühlers der Phasenüberprüfungsvorrichtung 17 gebildet. Dieser steht im Wesentlichen horizontal in der zweiten Funktionsebene F₂ bis in den Eingriffsbereich des Mitnehmers 9b vor.

In der Fig. 6B ist der Fehlerfall dargestellt, bei dem sich die Transporteinheit 9 nicht in korrekter Phasenlage befindet. Dadurch kommt es zur Kollision zwischen dem Tastschenkel 17b und dem Mitnehmer 9d, sodass der Fühler aus seiner in Fig. 6A dargestellten Ruheposition um einer Fühlerachse b verschwenkt wird. Dies wird von einem entsprechenden Schalter registriert, um so den Prozessablauf zu unterbrechen bzw. ein Anlaufen der Transportvorrichtung 8 zu unterbinden.

### Bezugszeichenliste:

- 1: Umformanlage
- 2: Vorformlingzuführung
- 3: Vorfomling
- 3a: Wandung
- 3b: Innenraum
- 3c: Halsabschnitt
- 4: Heizanordnung
- 5: Umformmaschine
- 6: Blasrad
- 7: Blasstation
- 7a: Außenform
- 8: Transportvorrichtung
- 9: Transporteinheit
- 9a: Halter
- 9b: Ritzel
- 9c: Welle
- 9d: Mitnehmer
- 9e: Führungsrolle
- 9f: Stift
- 9g: Verbindungsöffnung
- 9h: Schraubenfeder
- 9i: Schutzblech
- 10: Transportkette
- 11: Umlenkrad
- 12: Heizeinrichtung
- 13, 13': Führungsschiene
- 13a: Führungsnut
- 14: Umlaufschiene
- 14a: Führungsnut
- 15: Transformationsschiene
- 15a: geradliniger Bereich
- 15b: gekrümmter Bereich
- 16: Zahnstange
- 17: Phasenüberprüfungsvorrichtung
- 17a: Außenkante
- 17b: Tastschenkel
- 18: Zahnstangenabschnitt
- 19: Schwenkarm
- 20: Phaseneinstellvorrichtung
- 21: Zykloide-Kurve
- A: Eingabebereich
- B: Ausgabebereich
- C, C': Austauschbereich
- F1, F2: Funktionsebene
- L: Längserstreckungsachse
- I, II: Heizstrecke
- T: Transportweg
- a: Schwenkachse
- b: Fühlerachse
- r: Rotationsachse
- t: Transportrichtung

## Patentansprüche

1. Umrüstbare Heizanordnung (4) für Vorformlinge (3) mit einer Transportvorrichtung (8) zum Transportieren der Vorformlinge von einem Eingabebereich (A) zu einem Ausgabebereich (B) entlang zumindest einer Heizstrecke (I, II), mit einer Vielzahl von in einer Transportrichtung (T) umlaufend bewegbaren Transporteinheiten (9), welche jeweils eine um eine Rotationsachse (r) drehbare Halterung (9a) zur Aufnahme jeweils eines Vorformlings (3), ein mit der Halterung (9a) drehgekoppeltes Ritzel in einer ersten Funktionsebene (F₁) und einen zu der Rotationsachse (r) exzentrischen Mitnehmer in einer zweiten Funktionsebene aufweist (F₂), wobei die Drehstellung der Halterung (9a) zwischen dem Eingabebereich (A) und dem Ausgabebereich (B) durch zumindest eine mit dem Ritzel (9b) und/oder dem Mitnehmer (9d) gekoppelte Zwangsführungsvorrichtung durchgängig festgelegt ist, wobei die Zwangsführungsvorrichtung zumindest eine entlang der Heizstrecke (I, II) ortsfest in der ersten Funktionsebene (F₁) an der Transportvorrichtung (8) angeordnete und mit dem Ritzel (9b) im Eingriff stehende Zahnstange (16, 18) und zumindest eine mit dem Mitnehmer (9d) gekoppelte Führungsnut (13a, 14a, 15a, 15b) umfasst, **dadurch gekennzeichnet, dass** zumindest ein Austauschbereich (C) ausgebildet ist, in dem alternativ ein mit dem Ritzel (9b) kämmender Zahnstangenabschnitt (18) in der ersten Funktionsebene (F₁) oder eine mit dem Mitnehmer (9d) gekoppelte Führungsschiene (13) in der zweiten Funktionsebene (F₂) montierbar ist.

2. Heizanordnung (4) nach dem vorangegangenen Anspruch, **gekennzeichnet durch** eine Phaseneinstellvorrichtung (20) welche dazu eingerichtet ist die Drehstellung sämtlicher in dem Austauschbereich befindlichen Transporteinheiten (9) auszurichten.

3. Heizanordnung (4) nach dem vorangegangenen Anspruch, **dadurch gekennzeichnet, dass** die Phaseneinstellvorrichtung (20) als Schablone ausgestaltet ist, welche eine Außenform zur Ausrichtung der in dem Austauschbereich (C) befindlichen Transporteinheiten (9) bei einer Positionierung darin aufweist.

4. Heizanordnung (4) nach dem vorangegangenen Anspruch, **dadurch gekennzeichnet, dass** die Außenform als Zykloide (21) ausgebildet ist.

5. Heizanordnung (4) nach einem der vorangegangenen Ansprüche 3 oder 4, **dadurch gekennzeichnet, dass** die Schablone in der zweiten Funktionsebene (F₂) in den Austauschbereich (C) einschiebbar ist.

6. Heizanordnung (4) nach einem der vorangegangenen Ansprüche 3 oder 4, **dadurch gekennzeichnet, dass** die Schablone mit dem Zahnstangenabschnitt (18) verbunden ist.

7. Heizanordnung (4) nach einem der vorangegangenen Ansprüche 2 bis 6, **dadurch gekennzeichnet, dass** die Phaseneinstellvorrichtung (20) an einer Seite eine dem Verlauf des Transportwegs (T) in dem Austauschbereich (C) entsprechende, insbesondere gerade, Kante aufweist.

8. Heizanordnung (4) nach einem der vorangegangenen Ansprüche, **dadurch gekennzeichnet, dass** der Austauschbereich (C) in der Transportrichtung (t) eine Länge aufweist, welche einem ganzzahligen Vielfachen der Abrolllänge des Ritzels entspricht

9. Heizanordnung (4) nach einem der vorangegangenen Ansprüche, **dadurch gekennzeichnet, dass** der Zahnstangenabschnitt (18) an der Transportvorrichtung (8) zwangsgeführt befestigt ist.

10. Heizanordnung (4) nach dem vorangegangenen Anspruch, **dadurch gekennzeichnet, dass** der Zahnstangenabschnitt (18) mit zumindest einem Schwenkarm (19) klappbar an der Transportvorrichtung (8) befestigt ist.

11. Heizanordnung (4) nach einem der vorangegangenen Ansprüche, **dadurch gekennzeichnet, dass** der Zahnstangenabschnitt (18), die Führungsschiene und/oder deren Halterungen an der Transportvorrichtung (8) derart ausgestaltet ist/sind, dass eine gleichzeitige Montierung in dem Austauschbereich (C) ausgeschlossen ist.

12. Heizanordnung (4) nach einem der vorangegangenen Ansprüche, **gekennzeichnet durch** mehrere Heizstrecken (I, II) entlang des Transportwegs (T), und **dadurch, dass** davon eine, mehrere oder sämtliche mit ein oder mehreren Austauschbereichen (C, C') ausgebildet sind, in denen jeweils ein Zahnstangenabschnitt (18) durch eine Führungsschiene (13, 13') austauschbar ist.

13. Heizanordnung (4) nach einem der vorangegangenen Ansprüche, **dadurch gekennzeichnet, dass** die Heizeinrichtung (4) zumindest eine Phasenüberprüfungsvorrichtung (17) aufweist.

14. Heizanordnung (4) nach dem vorangegangenen Anspruch, **dadurch gekennzeichnet, dass** die Phasenüberprüfungsvorrichtung (17) eine Tastkurve aufweist, welche zumindest Teile einer Zykloide abbildet.

15. Heizanordnung (4) nach dem vorangegangenen Anspruch, **dadurch gekennzeichnet, dass** die Tastkurve als Kante (17a) eines insbesondere blechförmigen Fühlers ausgebildet ist.

16. Heizanordnung (4) nach einem der vorangegangenen Ansprüche 13 bis 15, **dadurch gekennzeichnet, dass** die Phasenüberprüfungsvorrichtung (17) im Bereich des Zahnstangenabschnitts (18) angeordnet ist.

17. Umformanlage (1) zum Umformen von Vorformlingen (3) zu Behältern mit einer Vorformlingzuführung (2) und einer Behälterumformvorrichtung (5), insbesondere Streckblasmaschine, **dadurch gekennzeichnet, dass** die Vorformlingzuführung (2) an einen Eingabebereich (A) einer Heizanordnung (4) gemäß einem der vorangegangenen Ansprüche angeschlossen ist und dass deren Ausgabebereich (B) an die Behälterumformvorrichtung (5) angeschlossen ist.

18. Umformanlage (1) nach dem vorangegangenen Anspruch, **dadurch gekennzeichnet, dass** die Behälterumformvorrichtung (5) eine Vielzahl von Umformstationen (7) mit jeweils einer Außenform (7a) aufweist und dass die Außenformen (7a) insbesondere austauschbar sind.

19. Verfahren zum Umrüsten einer Heizanordnung (4) mit einer Transportvorrichtung (8) zum Transportieren der Vorformlinge von einem Eingabebereich (A) zu einem Ausgabebereich (B) entlang zumindest einer Heizstrecke (I, II), mit einer Vielzahl von in einer Transportrichtung (T) umlaufend bewegbaren Transporteinheiten (9), welche jeweils eine um eine Rotationsachse (r) drehbare Halterung (9a) zur Aufnahme jeweils eines Vorformlings (3), ein mit der Halterung (9a) drehgekoppeltes Ritzel in einer ersten Funktionsebene (F₁) und einen zu der Rotationsachse (r) exzentrischen Mitnehmer in einer zweiten Funktionsebene aufweist (F₂), wobei die Drehstellung der Halterung (9a) zwischen dem Eingabebereich (A) und dem Ausgabebereich (B) durch zumindest eine mit dem Ritzel (9b) und/oder dem Mitnehmer (9d) gekoppelte Zwangsführungsvorrichtung durchgängig festgelegt ist, wobei die Zwangsführungsvorrichtung zumindest eine entlang der Heizstrecke (I, II) ortsfest in der ersten Funktionsebene (F₁) an der Transportvorrichtung (8) angeordnete und mit dem Ritzel (9b) im Eingriff stehende Zahnstange (16, 18) und zumindest eine mit dem Mitnehmer (9d) gekoppelte Führungsnut (13a, 14a, 15a, 15b) umfasst und wobei zumindest ein Austauschbereich (C) ausgebildet ist, in dem alternativ ein mit dem Ritzel (9b) kämmender Zahnstangenabschnitt (18) in der ersten Funktionsebene (F₁) oder eine mit dem Mitnehmer (9d) gekoppelte Führungsschiene (19) in der zweiten Funktionsebene (F₂) montierbar ist, insbesondere nach einem der Ansprüche 1 bis 16 oder zum Umrüsten einer eine solche Heizeinrichtung (2) umfassenden Umformanlage (1) nach einem der Ansprüche 17 oder 18,
- wobei die Transportvorrichtung (8) zunächst in Stillstand versetzt wird,
- wobei zum Umrüsten der Heizeinrichtung (4) in dem Austauschbereich (C) zunächst die Führungsschiene (13) aus der zweiten Funktionsebene (F₂) entfernt wird,
- wobei die in dem Austauschbereich (C) befindlichen Transporteinheiten (9) ausgerichtet und anschließend der Zahnstangenabschnitt (18) in der ersten Funktionsebene (F₁) montiert wird.

20. Verfahren zum Umrüsten einer Heizanordnung (4) mit einer Transportvorrichtung (8) zum Transportieren der Vorformlinge von einem Eingabebereich (A) zu einem Ausgabebereich (B) entlang zumindest einer Heizstrecke (I, II), mit einer Vielzahl von in einer Transportrichtung (T) umlaufend bewegbaren Transporteinheiten (9), welche jeweils eine um eine Rotationsachse (r) drehbare Halterung (9a) zur Aufnahme jeweils eines Vorformlings (3), ein mit der Halterung (9a) drehgekoppeltes Ritzel in einer ersten Funktionsebene (F₁) und einen zu der Rotationsachse (r) exzentrischen Mitnehmer in einer zweiten Funktionsebene aufweist (F₂), wobei die Drehstellung der Halterung (9a) zwischen dem Eingabebereich (A) und dem Ausgabebereich (B) durch zumindest eine mit dem Ritzel (9b) und/oder dem Mitnehmer (9d) gekoppelte Zwangsführungsvorrichtung durchgängig festgelegt ist, wobei die Zwangsführungsvorrichtung zumindest eine entlang der Heizstrecke (I, II) ortsfest in der ersten Funktionsebene (F₁) an der Transportvorrichtung (8) angeordnete und mit dem Ritzel (9b) im Eingriff stehende Zahnstange (16, 18) und zumindest eine mit dem Mitnehmer (9d) gekoppelte Führungsnut (13a, 14a, 15a, 15b) umfasst und wobei zumindest ein Austauschbereich (C) ausgebildet ist, in dem alternativ ein mit dem Ritzel (9b) kämmender Zahnstangenabschnitt (18) in der ersten Funktionsebene (F₁) oder eine mit dem Mitnehmer (9d) gekoppelte Führungsschiene (19) in der zweiten Funktionsebene (F₂) montierbar ist, insbesondere nach einem der Ansprüche 1 bis 16 oder zum Umrüsten einer eine solche Heizeinrichtung (2) umfassenden Umformanlage (1) nach einem der Ansprüche 17 oder 18,
- wobei die Transportvorrichtung (8) zunächst in Stillstand versetzt wird,
- wobei zunächst die Zahnstange (18) aus der ersten Funktionsebene (F₁) demontiert wird,
- wobei die Mitnehmer (9d) der in dem Austauschbereich (C) befindlichen Transporteinheiten (9) anschließend ausgerichtet und in die Führungsschiene (13) eingeführt werden und
- wobei die Führungsschiene (13) anschließend an der Transportvorrichtung (8) befestigt wird.
